# FASCICULE DE BREVET EUROPEEN

(11) **EP 0 721 244 B1**
(45) Date de publication et mention de la délivrance du brevet: **13.01.1999**
(21) Numéro de dépôt: 95410133.3
(22) Date de dépôt: 24.11.1995
(51) Int. Cl.: H02G 3/12

(54) **Boîtier pour appareillage électrique à encastrer dans une cloison creuse**
Einbaudöse für elektrisches Gerät zur Montage in einer dünnen Wand
Electrical apparatus box for flush mounting in a thin wall

(30) Priorité: 23.12.1994 FR 9415808
(43) Date de publication de la demande: 10.07.1996
(73) Titulaire: SCHNEIDER ELECTRIC SA, 92100 Boulogne Billancourt (FR)
(72) Inventeur: Pichon, Serge, F-38050 Grenoble Cedex 09 (FR); Bermond, Frédéric, F-38050 Grenoble Cedex 09 (FR); Bonnet, Jean-Marc, F-38050 Grenoble Cedex 09 (FR)
(74) Mandataire: Hecké, Gérard

(56) Documents cités:
- CA-A- 1 079 839
- NL-A- 8 300 982
- US-A- 2 315 746

## Description

La présente invention concerne un boîtier pour appareillage électrique à encastrer dans une cloison creuse, le boîtier comportant un fond, des parois latérales et des moyens de fixation dans une ouverture correspondante ménagée dans ladite cloison, dans lequel lesdits moyens de fixation comportent au moins deux pièces d'adaptation respectivement solidaires de deux parois latérales opposées du boîtier et pourvues chacune d'une patte agencée pour être repliée contre la surface intérieure de ladite cloison creuse au moyen d'une vis de réglage prenant appui sur ladite patte.

Ce type de boîtier est généralement utilisé pour être encastré dans des cloisons minces du type cloisons-panneaux dont l'épaisseur peut être variable sensiblement entre 10 à 12 mm et 40 à 50 mm. Les moyens de fixation habituellement utilisés pour assurer le maintien de ces boîtiers dans les ouvertures pratiquées dans les cloisons sont pourvus de pattes plus ou moins élastiques ou pliables, destinées à se rabattre au moins partiellement à l'arrière de la surface intérieure de la cloison afin de générer une contrainte de retenue des boîtiers encastrés dans l'ouverture par appui desdites pattes contre ladite surface intérieure.

Le problème que posent ces boîtiers est dû au fait que les moyens de fixation, et notamment les pattes, sont tous identiques alors que l'épaisseur des parois peut varier. De ce fait, la fixation des boîtiers est rendue difficile, parce qu'il n'est pas aisé de replier les pattes de façon adéquate pour qu'elles prennent appui suffisamment fermement contre la surface intérieure de la cloison afin d'assurer un montage stable du boîtier. Pour pouvoir garantir un tel montage, il serait nécessaire de prévoir des moyens de fixation dont les pattes repliables soient adaptées aux différentes épaisseurs de cloisons, ce qui n'est pas réaliste en raison du coût de fabrication et de stockage trop élevé.

Le document US-A-2 315 746 décrit une pièce d'adaptation formée par une languette dont l'extrémité est solidarisée au boîtier par un rivet, et pliable au moyen d'une vis traversant un orifice du boîtier.

La présente invention se propose de pallier cet inconvénient en réalisant un boîtier du type défini ci-dessus et dont les moyens de fixation sont conçus pour pouvoir être ajustés en fonction des épaisseurs de cloisons creuses, ces moyens de fixation assurant néanmoins une grande stabilité de montage du boîtier.

Ce but est atteint par le boîtier selon l'invention, caractérisé en ce que en ce que la vis de réglage est engagée dans un écrou, lequel écrou est inséré dans une ouverture oblongue ménagée dans la paroi latérale correspondante du boîtier en étant mobile le long de cette ouverture.

Selon un mode de réalisation avantageux, la patte comporte des amorces de pliage agencées pour faciliter le pliage et l'appui de la patte pliée contre la surface intérieure de la cloison creuse. L'ouverture ménagée dans les parois latérales du boîtier présente une forme allongée dans laquelle l'écrou peut coulisser librement et une zone circulaire permettant l'insertion de cet écrou.

D'autres avantages et particularités de la présente invention ressortiront mieux de la description d'une forme de réalisation préférée de l'invention, donnée à titre d'exemple non limitatif, et des dessins annexés dans lesquels :

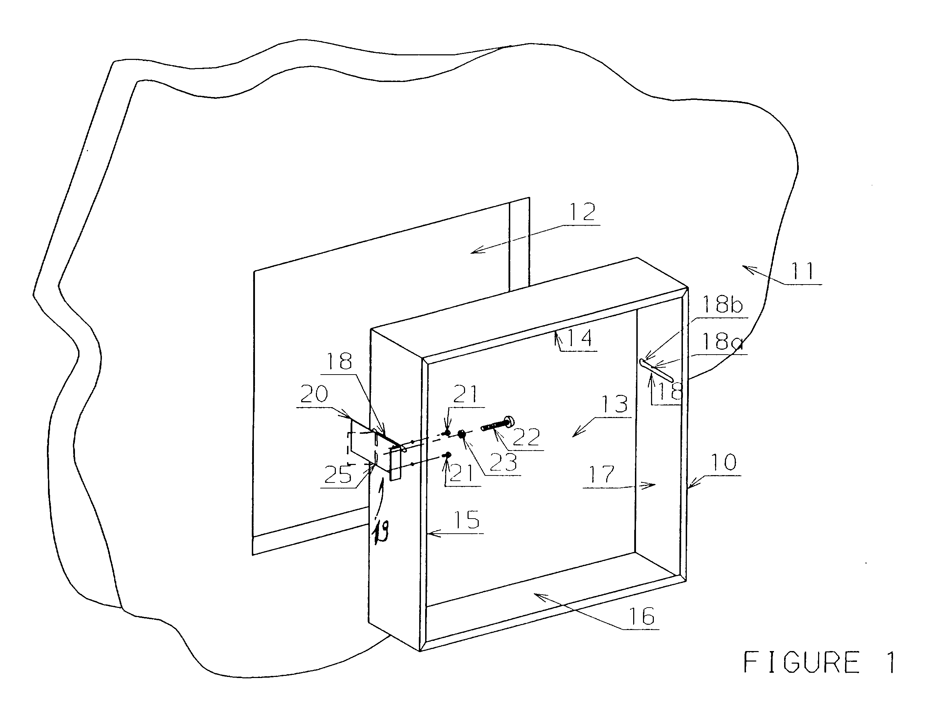

- la figure 1 représente une vue en perspective éclatée du boîtier selon l'invention,

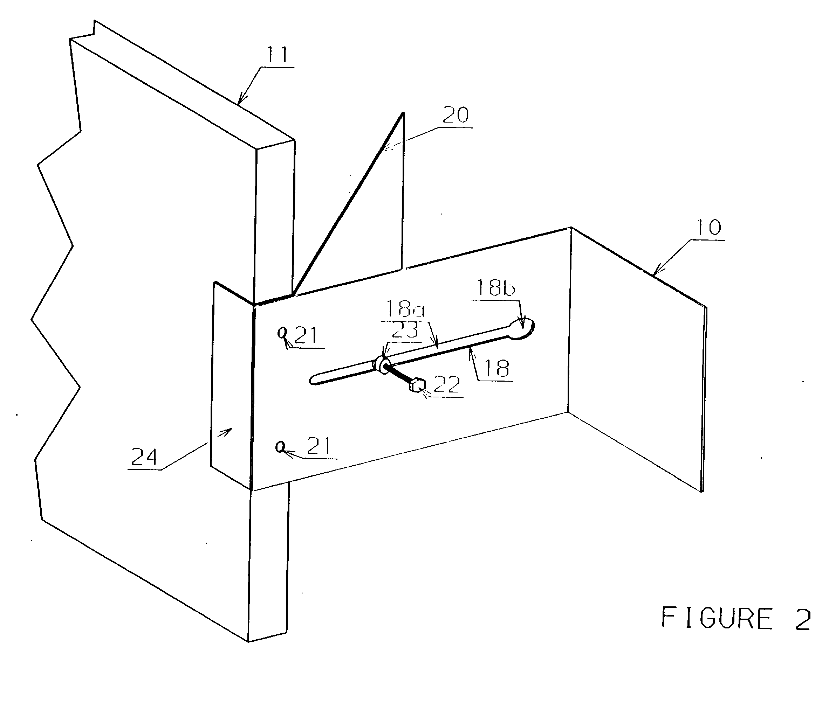

- la figure 2 représente une vue partielle en perspective illustrant une première phase de l'encastrement du boîtier dans une cloison creuse,
- la figure 3 représente une vue de dessus illustrant les moyens de fixation du boîtier selon l'invention,
- la figure 4 représente le boîtier selon l'invention vu en perspective de l'arrière et encastré dans une cloison creuse, et
- la figure 5 est une vue similaire à la figure 3 et représentant une variante de réalisation du boîtier selon l'invention.

En référence aux figures, le boîtier 10 représenté est prévu pour être encastré dans une cloison creuse ou cloison mince 11, c'est-à-dire logé dans une ouverture 12 ménagée dans cette cloison. Le boîtier 10 a par exemple une forme parallélépipédique de section rectangulaire ou carrée et comporte un fond 13 et quatre parois latérales 14, 15, 16 et 17 perpendiculaires à ce fond. La hauteur des parois latérales est supérieure à l'épaisseur de la cloison creuse 11. Deux de ces parois latérales opposées, par exemple les parois 15 et 17 sont équipées de moyens de fixation du boîtier 10. Ces moyens comprennent d'une part une ouverture oblongue 18 ménagée dans la paroi du boîtier, et d'autre part une pièce d'adaptation 19. Cette pièce d'adaptation comporte une patte 20 agencée pour être repliée contre la surface intérieure de la cloison creuse, et rendue solidaire de la paroi latérale correspondante au moyen de deux vis ou rivets 21, ainsi qu'une vis de réglage 22 engagée dans un écrou 23 inséré dans l'ouverture oblongue 18, et dont l'extrémité prend appui contre ladite patte 20.

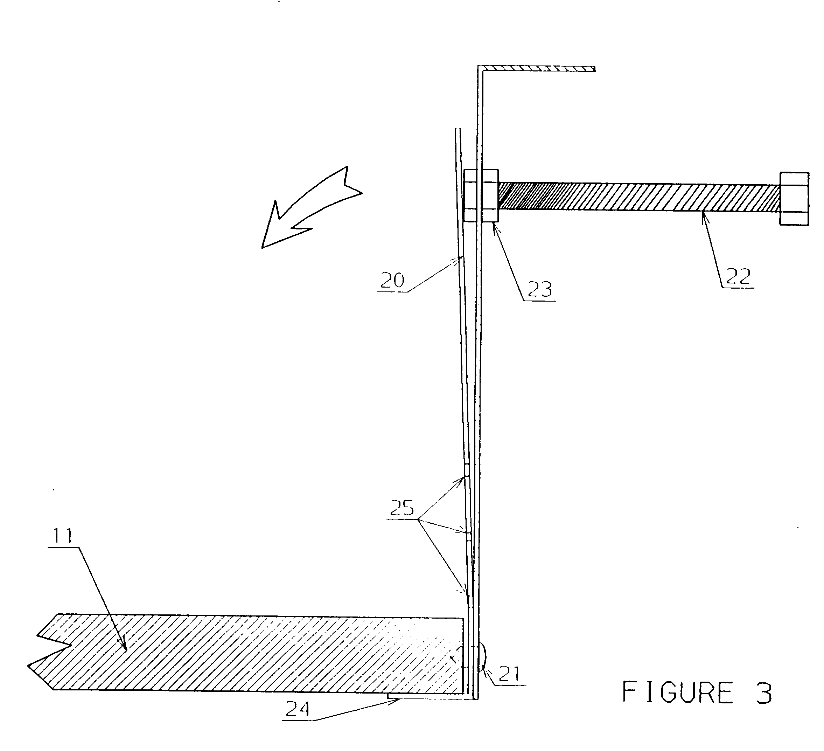

La patte 20 est coudée et présente un rebord 24 destiné à prendre appui contre la surface apparente, c'est-à-dire la surface extérieure de la cloison. La patte proprement dite est pourvue d'amorces de pliage 25 (voir fig. 3) pour faciliter son pliage sous l'action de la vis de réglage 22. L'écrou 23 est d'un type spécial et est conçu pour pouvoir coulisser dans l'ouverture oblongue 18, sans pouvoir tourner sur lui-même. Cette ouverture comporte à cet effet une zone allongée 18a dont les bords sont sensiblement parallèles et une zone circulaire 18b dont le diamètre est égal ou légèrement supérieur à celui de l'écrou 23, pour permettre son insertion dans l'ouverture. Cet écrou comporte de préférence deux méplats diamétralement opposés dont la distance est sensiblement égale à la largeur de la zone allongée 18a, afin qu'il puisse coulisser librement dans cette zone.

Initialement la patte 20 est disposée sensiblement parallèlement à la paroi latérale correspondante du boîtier. L'écrou est inséré dans l'ouverture oblongue et la vis est engagée dans cet écrou. Avant d'être vissée à fond, elle s'étend presque entièrement vers l'intérieur du boîtier. Lorsque le boîtier est logé dans l'ouverture 12 de la cloison 11, de telle manière que le rebord 24 de la patte soit appliqué contre la surface apparente de la cloison, l'opérateur tourne les vis de chacune des deux pièces d'adaptation, pour provoquer le repli de la patte à l'arrière de la cloison.

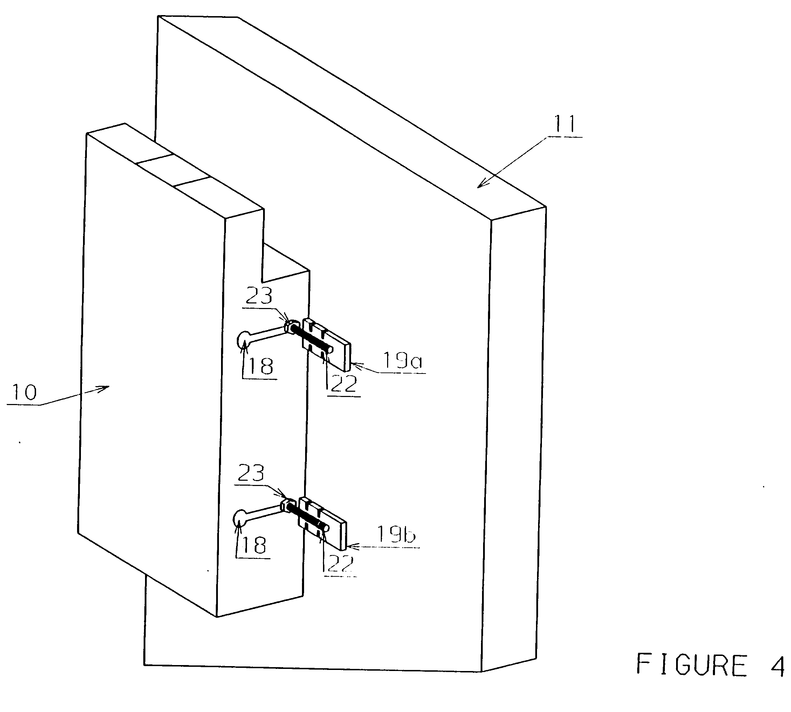

Le pli se forme au niveau des amorces de pliage. L'opérateur peut déplacer progressivement l'écrou dans la zone allongée 18a de l'ouverture oblongue 18 de manière à plaquer la patte repliée contre la surface intérieure de la cloison 11, comme le montre la figure 4.

Dans la réalisation illustrée par cette figure, les pièces d'adaptation sont au nombre de deux sur chacune des deux parois latérales opposées. Etant donné que le boîtier 10 est relativement haut, deux pièces d'adaptation 19a et 19b sont prévues sur deux parois latérales opposées de ce boîtier. Dans cette vue les vis de réglage 22 ont été vissées à fond dans les écrous 23 correspondants engagés dans les ouvertures oblongues 18. De ce fait les pattes 20 ont été repliées pour se plaquer contre la surface intérieure de la cloison 11 et assurer le maintien en place stable du boîtier.

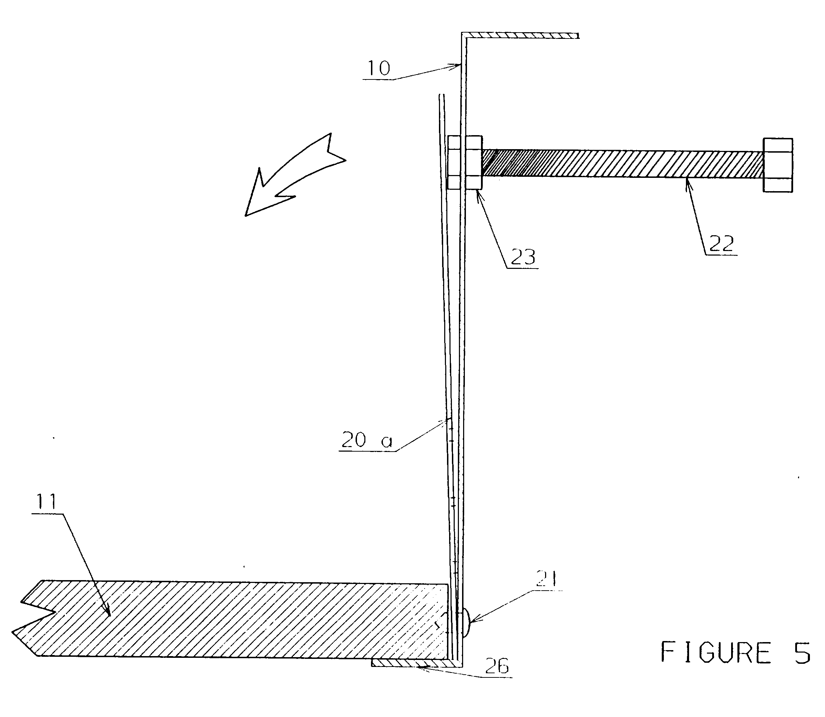

Dans la réalisation précédente, les pièces d'adaptation 19 sont pourvues d'un rebord 24 qui se plaque contre la surface apparente de la cloison. Ce rebord a pour fonction de retenir le boîtier de telle manière que ses parois latérales affleurent la surface apparente de la cloison et qu'il ne puisse pas être poussé à travers l'ouverture vers l'intérieur de l'espace délimité par la cloison creuse. Cette fonction peut être réalisée d'une manière différente si les parois latérales du boîtier 10 sont directement pourvues d'un rebord 26 servant d'appui contre la surface apparente de la cloison 11. Une telle réalisation est représentée par la figure 5. Dans ce cas la patte 20a est une pièce plane qui ne comporte pas de rebord, contrairement à la patte 20 de la réalisation selon la figure 3. Les autres fonctions et les autres composants sont tous identiques.

La présente invention n'est pas limitée aux formes de réalisation décrites ci-dessus, mais peut subir différentes modifications et se présenter sous diverses variantes évidentes pour un homme du métier, dans le cadre des revendications.

## Revendications

1. Boîtier pour appareillage électrique à encastrer dans une cloison (11) creuse, le boîtier (10) comportant un fond (13), des parois latérales (14, 15, 16, 17) et des moyens de fixation dans une ouverture (12) correspondante ménagée dans ladite cloison, dans lequel lesdits moyens de fixation comportent au moins deux pièces d'adaptation respectivement solidaires de deux parois latérales opposées du boîtier (10) et pourvues chacune d'une patte (20) agencée pour être repliée contre la surface intérieure de ladite cloison (11) creuse au moyen d'une vis de réglage (22) prenant appui sur ladite patte (20), caractérisé en ce que la vis de réglage (22) est engagée dans un écrou (23), lequel écrou est inséré dans une ouverture oblongue (18) ménagée dans la paroi latérale correspondante du boîtier (10) en étant mobile le long de cette ouverture.

2. Boîtier selon la revendication 1, caractérisé en ce que ladite patte (20) comporte des amorces de pliage (25) agencées pour faciliter le pliage de la patte contre la surface intérieure de la cloison creuse (11).

3. Boîtier selon la revendication 1, caractérisé en ce que ladite patte (20) est fixée à la paroi latérale correspondante du boîtier (10) au moyen d'au moins deux vis ou rivets (21).

4. Boîtier selon la revendication 1, caractérisé en ce que ladite patte (20) comporte un rebord (24) agencé pour prendre appui contre la surface apparente de la cloison creuse (11).

5. Boîtier selon la revendication 1, caractérisé en ce que les parois latérales (15, 16, 17, 18) sont pourvues d'un rebord (26) agencé pour prendre appui contre la surface apparente de la cloison creuse (11), et en ce que la patte (20a) est une pièce plane dépourvue de rebord.

6. Boîtier selon la revendication 1, caractérisé en ce que ladite ouverture oblongue (18) comporte une zone allongée (18a) dont les bords sont sensiblement parallèles et une zone circulaire (18b) dont le diamètre est légèrement supérieur à celui de l'écrou (23) pour permettre son insertion dans l'ouverture (18).

7. Boîtier selon la revendication 6, caractérisé en ce que ladite zone allongée (18a) a une largeur sensiblement égale à la distance entre deux méplats diamétralement opposés de l'écrou (23), ces méplats étant agencés pour que l'écrou puisse coulisser le long de la zone allongée (18a) de l'ouverture oblongue (18).

## Patentansprüche

1. Gehäuse für elektrische Schaltgeräte zur Montage in einer Hohlwand (11), welches Gehäuse (10) einen Boden (13), Seitenwände (14, 15, 16, 17) sowie Mittel zur Befestigung in einem zugehörigen, in der genannten Wand ausgebildeten Ausschnitt (12) umfaßt, wobei die genannten Befestigungsmittel mindestens zwei Adapterstücke umfassen, die jeweils mit zwei einander gegenüberliegenden Seitenwänden des Gehäuses (10) verbunden sind und jeweils eine Lasche (20) aufweisen, die dazu dient, mit Hilfe einer, sich an der genannten Lasche abstützenden Einstellschraube (22) gegen die Innenseite der genannten Hohlwand (11) gebogen zu werden, dadurch gekennzeichnet, daß die Einstellschraube (22) in eine Mutter (23) eingedreht ist, welche Mutter in eine, in der zugehörigen Seitenwand des Gehäuses (10) ausgebildete längliche Aussparung (18) eingesetzt ist und entlang dieser Aussparung verschoben werden kann.

2. Gehäuse nach Anspruch 1, dadurch gekennzeichnet, daß die genannte Lasche (20) Biegekerben (25) aufweist, die dazu dienen, das Abkanten der Lasche gegen die Innenseite der Hohlwand (11) zu erleichtern.

3. Gehäuse nach Anspruch 1, dadurch gekennzeichnet, daß die genannte Lasche (20) mit Hilfe von mindestens zwei Schrauben oder Nieten (21) an der entsprechenden Seitenwand des Gehäuses (10) befestigt ist.

4. Gehäuse nach Anspruch 1, dadurch gekennzeichnet, daß die genannte Lasche (20) einen Umschlag (24) aufweist, der zur Auflage auf der sichtbaren Seite der Hohlwand (11) dient.

5. Gehäuse nach Anspruch 1, dadurch gekennzeichnet, daß die Seitenwände (14, 15, 16, 17) einen Umschlag (26) aufweisen, der zur Auflage auf der sichtbaren Seite der Hohlwand (11) dient, und daß die Lasche (20a) als Flachteil ohne jeglichen Umschlag ausgebildet ist.

6. Gehäuse nach Anspruch 1, dadurch gekennzeichnet, daß die längliche Aussparung (18) einen langgezogenen Bereich (18a) mit annähernd parallel zueinander verlaufenden Rändern sowie einen kreisrunden Bereich (18b) umfaßt, dessen Durchmesser geringfügig größer ist als der Durchmesser der Mutter (23), um deren Einsetzen in die Aussparung (18) zu ermöglichen.

7. Gehäuse nach Anspruch 6, dadurch gekennzeichnet, daß die Breite des genannten langgezogenen Bereichs (18a) annähernd dem Abstand zwischen zwei diametral einander gegenüberliegenden Abflachungen der Mutter (23) entspricht, wobei diese Abflachungen so ausgelegt sind, daß die Mutter in dem langgezogenen Bereich (18a) der länglichen Aussparung (18) entlanggleiten kann.

## Claims

1. A case for electrical switchgear for flush mounting in a hollow partition (11), the case (10) comprising a back plate (13), side walls (14, 15, 16, 17) and fixing means for fixing in a corresponding opening (12) arranged in said partition, wherein said fixing means comprise at least two fitting parts respectively secured to two opposite side walls of the case (10) and each provided with a lug (20) arranged to be folded against the intemal surface of said hollow partition (11) by means of an adjustment screw (22) bearing on said lug (20), characterized in that the adjustment screw (22) is engaged in a nut (23), which nut is inserted in an oblong opening (18) arranged in the corresponding side wall of the case (10) being movable along this opening.

2. The case according to claim 1, characterized in that said lug (20) comprises beginnings of folds (25) arranged to facilitate folding of the lug against the intemal surface of the hollow partition (11).

3. The case according to claim 1, characterized in that said lug (20) is fixed to the corresponding side wall of the case (10) by means of at least two screws or rivets (21).

4. The case according to claim 1, characterized in that said lug (20) comprises an edge (24) arranged to bear against the apparent surface of the hollow partition (11).

5. The case according to claim 1, characterized in that the side walls (14, 15, 16, 17) are provided with an edge (26) arranged to bear against the apparent surface of the hollow partition (11), and that the lug (20a) is a flat part not having any edges.

6. The case according to claim 1, characterized in that said oblong opening (18) comprises an elongate zone (18a) whose edges are appreciably parallel and a circular zone (18b) whose diameter is slightly greater than that of the nut (23) to enable insertion of the latter in the opening (18).

7. The case according to claim 6, characterized in that said elongate zone (18a) has a width appreciably equal to the distance between two diametrically opposite flats of the nut (23), these flats being arranged so that the nut can slide along the elongate zone (18a) of the oblong opening (18).
